# EUROPÄISCHE PATENTSCHRIFT

(11) **EP 1 236 253 B1**
(45) Veröffentlichungstag und Bekanntmachung des Hinweises auf die Patenterteilung: **12.11.2003**
(21) Anmeldenummer: 00962391.9
(22) Anmeldetag: 26.08.2000
(51) Int. Cl.: H02B 1/044

(54) **ELEKTRISCHES FUNKTIONSGERÄT, INSBESONDERE SCHUTZSCHALTER, ZUM EINSATZ IN DER LUFTFAHRT**
ELECTRICAL FUNCTIONAL DEVICE, ESPECIALLY A SAFETY SWITCH FOR USE IN FIELD OF AVIATION
APPAREIL ELECTRIQUE FONCTIONNEL, EN PARTICULIER COMMUTATEUR DE SECURITE, DESTINE A ETRE EMPLOYE EN AERONAUTIQUE

(30) Priorität: 09.12.1999 DE 19959339
(43) Veröffentlichungstag der Anmeldung: 04.09.2002
(73) Patentinhaber: Ellenberger & Poensgen GmbH, D-90518 Altdorf (DE)
(72) Erfinder: MECKLER, Peter, 91224 Hohenstadt/Pommelsbrunn (DE); ELLENBERGER, Horst, 90518 Altdorf (DE); SCHNEIDER, Ewald, 91238 Offenhausen (DE); HOFMEISTER, Lothar, 92318 Neumarkt/Opf. (DE)
(74) Vertreter: Tergau & Pohl Patentanwälte
(86) Internationale Anmeldenummer: EP0008336
(87) Internationale Veröffentlichungsnummer: WO01043247

(56) Entgegenhaltungen:
- DE-C- 4 040 481
- US-A- 3 500 282

## Beschreibung

Die Erfindung betrifft ein elektrisches Funktionsgerät der im Oberbegriff des Anspruches 1 näher genannten Art. Derartige Funktionsgeräte, insbesondere Schutzschalter, sind z.B. bekannt aus DE 2 123 765, DE 40 40 481 C1, DE-U-8 904 063, US 4 400 677 oder FR 2 067 954.

Derartige elektrische Funktionsgeräte, insbesondere Schutzschalter, sind vielfach mittels einer Gewindehalsbefestigung innerhalb eines Wandelements oder Wandpaneels fixiert, Innerhalb dieses Gewindehalses befindet sich in der Regel ein aus dem Gehäuse nach außen vorstehendes und von außen betätigbares oder von außen wahrnehmbares Funktionsteil, z.B. eine Betätigungshandhabe oder eine Anzeigeeinrichtung. Aus Festigkeitsgründen besteht dabei der ein gesondertes Teil bildende, nicht in das Gehäuse integrierte Fixierhals aus einem metallischen Werkstoff, z.B. Stahl, Messing oder Aluminium. Diese Werkstoffe sind sämtlich elektrische Leiter und verursachen deswegen ein Isolationsproblem, welches zu seiner Bewältigung einen zusätzlichen konstruktiven Aufwand erfordert. Darüber hinaus verursacht das hohe spezifische Gewicht der Metallteile ein insbesondere bei einem Luftfahrzeug signifikantes Gewichtsproblem. Allein der Fixierhals macht nämlich bis zu 10% des Gesamtgewichtes des Funktionsgerätes aus. In einem Großraumflugzeug werden heute bis zu 800 derartige Schutzschalter eingesetzt.

Weiter werden an die Sicherheit der Gewindehalsfixierung am Wandelement bzw. Wandpaneel hohe Festigkeitsansprüche gestellt, die man bisher nur durch eine metallische Ausführung der Fixierhälse sicherstellen zu können glaubte.

Der Erfindung liegt die Aufgabe zugrunde, derartige für den Einsatz in der Luftfahrt bestimmte Funktionsgeräte, insbesondere Schutzschalter, gewichtsmäßig leichter auszugestalten, ohne dadurch die Festigkeit der Gewindehalsfixierung zu beeinträchtigen. Diese Aufgabe wird durch Anspruch 1 gelöst. Der bei diesem Lösungsweg vorgesehene Ersatz des herkömmlichen, aus einem metallischen Werkstoff gefertigten Fixierhalses durch einen aus Kunststoff gefertigten Fixierhals ist nur scheinbar naheliegend. Dabei bereiten nämlich die Übergänge vom Fixierhalsgewinde in den gewindefreien, im Wesentlichen zylindrischen Schaftbereich und von diesem Schaftbereich in den Anlageflansch des Fixierhalses ein erhebliches Festigkeitsproblem. Diese Übergänge haben einen entscheidenden Einfluss auf die Festigkeit und Sicherheit der Gerätefixierung am Wandpaneel bzw. Wandelement. Das haben Versuche ergeben. Hier sind von wesentlicher Bedeutung die Bemessung des Außendurchmessers des im Wesentlichen zylindrischen Schaftbereiches zwischen dem Gewindeteil des Fixierhalses und dem Anlageflansch sowie die Ausgestaltung und Bemessung des Überganges des gewindefreien, im Wesentlichen zylindrischen Schaftbereiches in den Anlageflansch. Die diesbezüglichen anspruchsgemäßen Bemessungen haben sich als wesentlich für die Festigkeitsvergrößerung erwiesen und damit den Weg zur Fertigung des Fixierhalses aus Kunststoff anstelle des bisher üblichen metallischen Werkstoffes eröffnet. Eine weitere, diesbezüglich zweckmäßige Bemessung des Fixierhalses ist Gegenstand des Anspruches 2. Vergleichbares gilt für die Maßnahme nach Anspruch 3.

Die Fertigung des Fixierhalses aus Kunststoff ermöglicht die Formgestaltung des Fixierhalses zu einem einstückigen, integralen Mehrfunktionsbauteil, welches dadurch zusätzlich einen Verdrehschutz gegenüber dem Wandpaneel enthalten kann, der beim herkömmlich metallischen Fixierhals durch ein gesondertes, diskretes Bauteil gebildet ist. Ähnliches trifft für die Ausbildung nach Anspruch 5 zu. Die hier weiter vorgesehene lsolierabdeckung dient zur Abschirmung der spannungsführenden Innenteile des elektrischen Funktionsgerätes nach außen.

Der Gegenstand der Erfindung wird anhand der Figuren beispielsweise beschrieben. Es zeigen:
- Fig. 1: eine Draufsicht auf die Innenseite des Endes einer Gehäuseschale mit geschnittenem einliegenden Fixierhals.

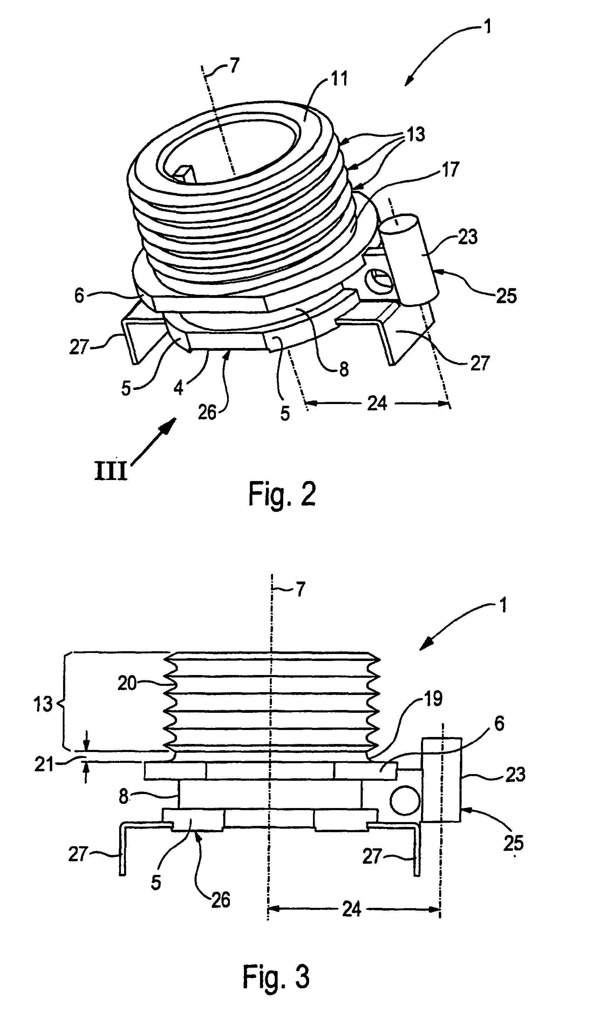

- Fig. 2: den erfindungsgemäßen Fixierhals in perspektivischer Schrägdraufsicht.
- Fig. 3: eine Seitenansicht in Pfeilrichtung III von Fig. 1.
- Fig. 4: eine Seitenansicht des Fixierhalses mit Kenntlichmachung erfindungswesentlicher Abmessungsgrößen.
- Fig. 5: eine den Positionszustand des Fixierhalses in seiner Montagestellung im Wandpaneel schematisierende Seitenansicht analog Fig. 3 im Schnitt.
- Fig. 6: vier den Anlagebereich des Anlageflansches des Fixierhalses in Montagestellung am Anlageflansch schematisierende Seitenansichten in jeweils um 90° versetzten Drehstellungen. Dadurch wird die Gestaltung des Überganges des Feingewindes in den gewindefreien, zylindrischen Schaftbereich bildlich verdeutlicht.

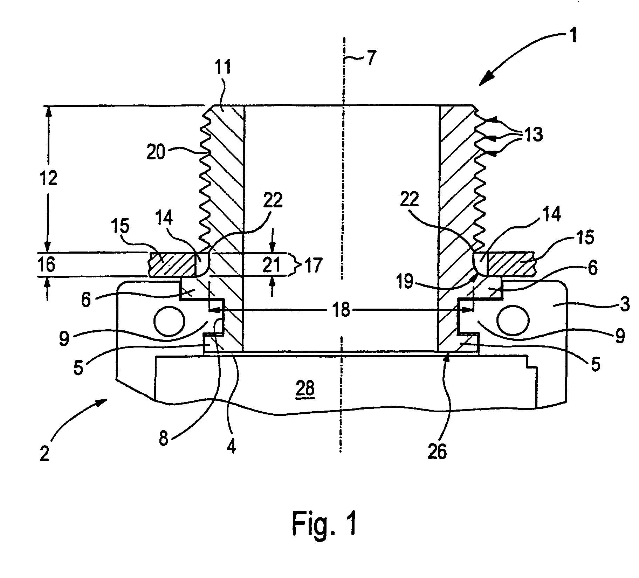

Von dem nicht vollständig abgebildeten Gehäuse eines elektrischen Schutzschalters ist lediglich das den erfindungsgemäßen Fixierhals 1 tragende Gehäuseende 3 einer Gehäuseschale 2 mit Draufsicht auf ihre nach oben offene Gehäuseinnenseite 28 dargestellt. Der Fixierhals 1 ist ein von der Gehäuseschale 2, also vom Gehäuse gesondertes, einstückig aus Kunststoff gefertigtes Bauteil. Der Fixierhals 1 trägt an seinem gehäuseseitigen Ende 4 einen radial vorstehenden Ringflansch 5 und in seinem Mittelbereich mit axialem Abstand zu diesem Ringflansch 5 einen radial weiter als der Ringflansch 5 über die Längsachse 7 der Aufnahmeöffnung des Gehäuses radial hinausstehenden Anlageflansch 6. Ringflansch 5 und Anlageflansch 6 bilden durch den zwischen ihnen bestehenden Axialabstand eine Ringnut 8 im Fixierhals 1. In diese Ringnut 8 ragt die Gehäuseschale 2 mit einer aus der Wand der halbkreisförmigen Gehäuseausnehmung radial nach innen vorstehenden Halbringrippe 9 formschlüssig lagefixierend hinein. Nach dem Einsetzen des Fixierhalses 1 in die Gehäuseausnehmung (Fig. 1) wird eine korrespondierende, hier nicht dargestellte Gehäuseschale auf die Gehäuseschale 2 aufgesetzt. Dadurch wird das in sich geschlossene Gehäuse komplettiert und die Ringnut 8 des Fixierhalses 1 ringsum einerseits von der Halbringrippe 9 der unteren Gehäuseschale 2 und andererseits von einer entsprechenden Halb-ringrippe der aufgedeckelten, hier nicht dargestellten Gehäuseschale ausgefüllt.

An seinem dem gehäuseseitigen Ringflansch 5 abgewandten, freien Ende 11 trägt der Fixierhals 1 über seine Axialerstreckung 12 umfangsseitig ein Feingewinde 13 zum Aufschrauben einer nicht dargestellten Mutter. Die Mutter dient zur Fixierung des Fixierhalses 1 und somit mittelbar des durch die Gehäuseschale 2 bzw. dadurch das Gehäuseende 3 symbolisch dargestellten Gehäuses, also des elektrischen Funktionsgerätes, insbesondere des Schutzschalters in dem Befestigungsloch 14 eines Wandelements bzw. Wandpaneels 15, welches hier nur symbolisch dargestellt ist und eine Wandstärke 16 aufweist.

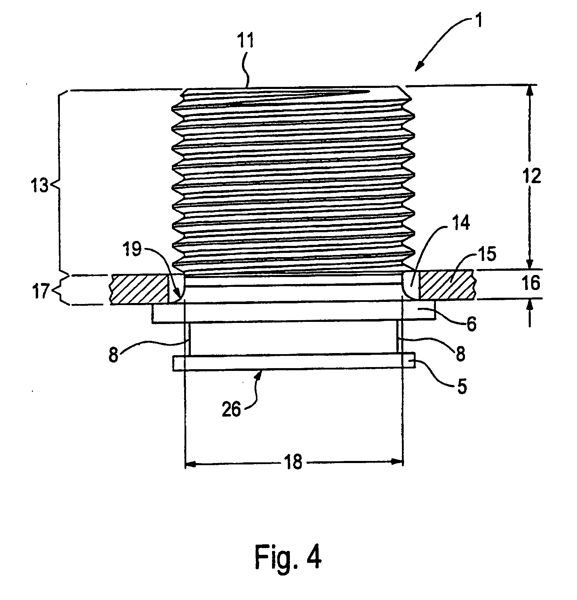

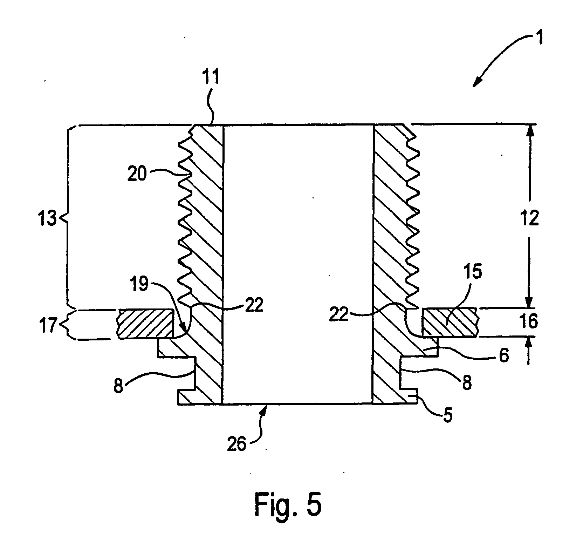

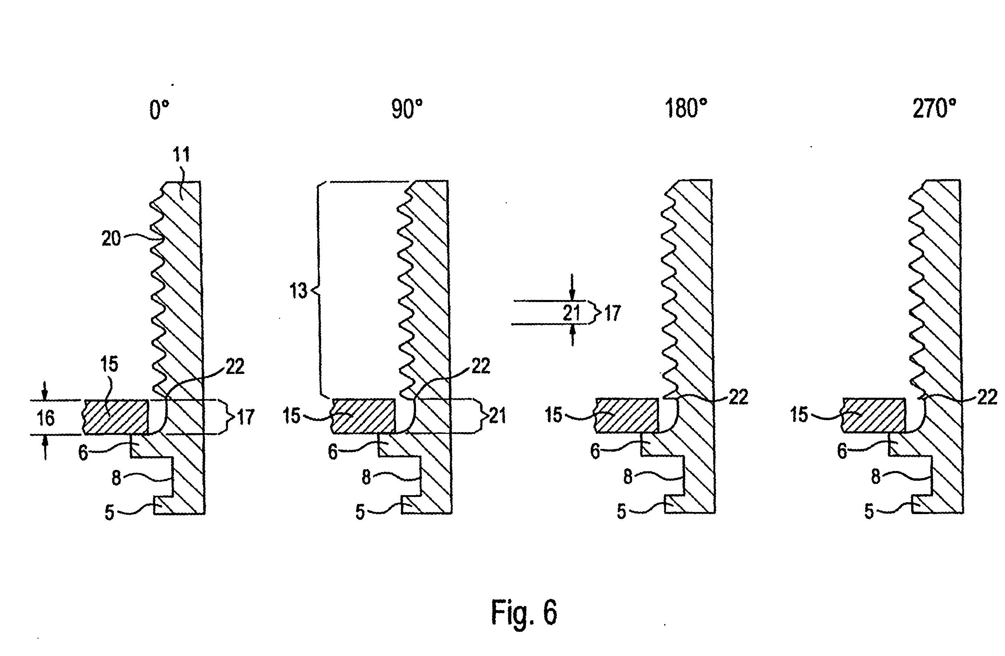

Im Montagezustand des Fixierhalses 1 bzw. des mit ihm verbundenen Gehäuses 2,3 am Wandelement bzw. Wandpaneel 15, d.h. bei auf das Feingewinde 13 aufgeschraubter Fixiermutter, liegt das Wandelement bzw. Wandpaneel 15 in Axialrichtung am Anlageflansch 6 verspannt an. Diese Anlageposition ist in den Fig. 1 und 4-6 dargestellt. In dieser Fixierposition liegt der Fixierhals mit einem gewindefreien Schaftbereich 17 innerhalb des Befestigungsloches 14 des Wandpaneels bzw. Wandelements 15 ein. Der Außendurchmesser 18 dieses gewindefreien Schaftbereiches 17 ist gleich groß wie der Kemdurchmesser des Feingewindes 13. Das dem Anlageflansch 6 zugewandte Ende des gewindefreien Schaftbereiches 17 geht in einer Abrundung 19 in den Anlageflansch 6 über. Die Abrundung 19 beschreibt dabei im Querschnitt einen Viertelkreisbogen. Der Radius der Abrundung 19 entspricht der Differenz aus dem Nennhalbmesser des Feingewindes 13 und dem halben Außendurchmesser 18 des gewindefreien Schaftbereiches 17.

Das Feingewinde 13 geht mit dem Radius der Abrundung 20 des Feingewindegrundes ohne Gewindeauslauf in den gewindefreien, im Wesentlichen zylindrischen Schaftbereich 17 des Fixierhalses 1 über.

Der gewindefreie Schaftbereich 17 weist eine Axiallänge 21 von mindestens der Summe der Radien der Abrundungen der Übergänge vom Feingewinde 13 in den gewindefreien Schaftbereich 17 und vom gewindefreien Schaftbereich 17 in den Anlageflansch 6 (= Abrundung 19) auf.

Mit dem Fixierhals 1 ist weiterhin ein mit seinem radial äußeren Ende 23 das Feingewinde 13 mit Radialabstand 24 außen flankierender Axialvorsprung 25 als in Montagestellung gegenüber dem Wandelement bzw. Wandpaneel 15 wirksamer Verdrehschutz einstückig ausgebildet.

In zwei einander diametral gegenüberliegenden Umfangsbereichen des befestigungsseitigen Endes 26 des Fixierhalses 1 sind zwei einander diametral gegenüberliegende, mit dem Fixierhals 1 einstückige lsolierabdeckungen 27 angeordnet, die am Befestigungsende 26 radial über den Fixierhals 1 hinausstehen. Sie sind in am Gehäuse wirksamer Montagestellung des Fixierhalses 1 innerhalb des Gehäuseinnenraumes 28 positioniert. In Montagestellung sind die lsolierabdeckungen 27 mit ihrer ebenen Erstrekkung rechtwinklig zur Längsachse 7 des Fixierhalses 1 ausgerichtet. Sie sind von einer so dünnen Wandstärke, dass sie sich an die Innenwände des Innenraumes 28 des Gehäuses 2,3 anschmiegen.

Als Werkstoff für den Fixierhals 1 wird ein mechanisch hochfester Kunststoff wie Polyesterimid (PEI), Liquid Crystal Polymer (LCP), Tetra-flourethylen/Ethylen-Copolymer (ETFE), Polyphenylen Sulfid (PPS), Polyamidimid (PAI) oder Polyimid (Pl) verwendet.

Der Fixierhals 1 kann auch in der figürlich dargestellten Position einstückig an ein Gehäuseteil angespritzt sein.

### Bezugszeichenliste

- 1: Fixierhals
- 2: Gehäuseschale
- 3: Gehäuseende
- 4: gehäuseseitiges Ende
- 5: Ringflansch
- 6: Anlageflansch
- 7: Längsachse
- 8: Ringnut
- 9: Halbringrippe
- 11: freies Ende
- 12: Axialerstreckung
- 13: Feingewinde
- 14: Befestigungsloch
- 15: Wandelement
- 16: Wandstärke
- 17: gewindefreier Schaftbereich
- 18: Außendurchmesser
- 19: Abrundung
- 20: Abrundung
- 21: Axiallänge
- 22: Abrundung Feingewinde 13 - Schaftbereich 17
- 23: radial äußeres Ende
- 24: Radialabstand
- 25: Axialvorsprung
- 26: Befestigungsende
- 27: lsolierabdeckung
- 28: Gehäuseinnenraum

## Patentansprüche

1. Elektrisches Funktionsgerät, insbesondere Schutzschalter, zum Einsatz in der Luftfahrt mit einem Gehäuse, aus welchem ein im Wesentlichen zylindrischer Fixierhals (1) vorsteht, der
- an seinem gehäuseabseitigen, freien Ende auf seinem Umfang ein Feingewinde (13) zum Aufschrauben einer Mutter aufweist,
- an seinem dem Gehäuse (3) zugewandten Ende einen radial hinausstehenden Anlageflansch (6) mit einer zur Längsachse (7) des Fixierhalses (1) normalen Ringflanke als Anlagefläche trägt und
- zur Gerätehalterung in einer Fixierposition dient, in der er durch ein Befestigungsloch (14) oder durch eine Befestigungsbohrung (14) eines Wandelements oder -paneels (15) hindurchsteht und darin von der aufgeschraubten Mutter gegen den Anlageflansch (6) verspannbar ist,
**dadurch gekennzeichnet,**
- **dass** der Fixierhals (1) als gesondertes, einstückig aus Kunststoff gefertigtes Teil im Bereich zwischen seinem Anlageflansch (6) und seinem gehäuseseitigen Ende (4) mit dem Gehäuse (3) verbunden ist,
- **dass** der Fixierhals (1) zwischen seinem Gewindeende und dem Anlageflansch (6) durch einen zur Längsachse (7) des Fixierhalses (1) koaxialen, gewindefreien Schaftbereich (17) von zylindrischer Umfangsform gebildet ist,
- dessen Außendurchmesser (18) gleich groß ist wie der Kemdurchmesser des angrenzenden Feingewindes (13) und
- dessen dem Anlageflansch (6) zugewandtes Ende in einer im Querschnitt etwa einen Viertelkreisbogen beschreibenden Abrundung (19) in den Anlageflansch (6) übergeht, wobei der Radius dieser Abrundung (19) übereinstimmt mit der Hälfte der Differenz zwischen dem Nenndurchmesser des Feingewindes (13) und dem Außendurchmesser (18) des gewindefreien Schaftbereiches (17), wobei
das Feingewinde (13) ohne Gewindeauslauf mit dem Radius der Abrundung (20) des Feingewindegrundes in den gewindefreien zylindrischen Schaftbereich (17) des Fixierhalses (1) übergeht.

2. Gerät nach Anspruch 1,
**dadurch gekennzeichnet,**
**dass** der gewindefreie zylindrische Schaftbereich (17) eine Axiallänge (21) von mindestens der Summe der Radien der Abrundungen (22,19) der Übergänge vom Feingewinde (13) in den gewindefreien Schaftbereich (17) und vom gewindefreien Schaftbereich (17) in den Anlageflansch (6) aufweist.

3. Gerät nach einem oder mehreren der vorhergehenden Ansprüche,
**dadurch gekennzeichnet,**
**dass** ein mit seinem radial äußeren Ende (23) das Feingewinde (13) auf seiner Auβenseite mit Radialabstand (24) flankierender Axialvorsprung (25) als in Montagestellung gegenüber dem Wandelement bzw. Wandpaneel (15) wirksamer Verdrehschutz einstückig mit dem Fixierhals (1) ausgebildet ist.

4. Gerät nach einem oder mehreren der vorhergehenden Ansprüche,
**gekennzeichnet durch**
an zwei einander diametral gegenüberliegenden Umfangsbereichen des Befestigungsendes (26) des Fixierhalses (1) über diesen radial hinausstehende, in am Gehäuse wirksamer Montagestellung des Fixierhalses (1) innerhalb des Gehäuseinnenraumes positionierte und mit dem Fixierhals einstückige, mit ihrer Ebenenerstreckung rechtwinklig zur Axialrichtung (7) des Fixierhalses (1) ausgerichtete lsolierabdeckungen (27).

5. Gerät nach einem oder mehreren der vorhergehenden Ansprüche,
**gekennzeichnet durch**
einen über einen großen Temperaturbereich mechanisch hochfesten Kunststoffwerkstoff des Fixierhalses (1) wie Polyesterimid (PEI), Liquid Crystal Polymer (LCP), Tetra-flourethylen/Ethylen-Copolymer (ETFE), Polyphenylen Sulfid (PPS), Polyamidimid (PAI), Polyimid (Pl).

6. Abwandlung eines Gerätes insbesondere nach einem oder mehreren der vorhergehenden Ansprüche,
**dadurch gekennzeichnet,**
**dass** der Fixierhals (1) an ein Gehäuseteil angespritzt ist.

## Claims

1. Electrical service device, in particular a circuit breaker, for use in aviation, having an enclosure from which an essentially cylindrical fixing neck (1) projects, which
- has a fine-pitched thread (13) on its circumference for screwing a nut onto, at its free end remote from the enclosure,
- is fitted at its end facing the enclosure (3) with a radially projecting mounting flange (6) with an annular flank, which is at right angles to the longitudinal axis (7) of the fixing neck (1), as a mounting surface, and
- is used for holding the device in a fixing position in which it passes through a mounting hole (14) in a wall element or panel (15) and can be clamped therein against the mounting flange (6) by the nut that is screwed on,
**characterized**
- **in that** the fixing neck (1) is connected to the enclosure (3) as a separate part, which is manufactured integrally from plastic, in the area between its mounting flange (6) and its end (4) on the enclosure side,
- **in that** the fixing neck (1) is formed by a cylindrical outer shape between its thread end and the mounting flange (6) by means of an unthreaded shank region (17) which is coaxial with respect to the longitudinal axis (7) of the fixing neck (1),
- whose external diameter (18) is the same size as the core diameter of the adjacent fine-pitched thread (13), and
- whose end facing the mounting flange (6) merges in a rounded region (19), whose cross section describes approximately a quarter-circular arc, into the mounting flange (6), with the radius of this rounded region (19) corresponding to half the difference between the nominal diameter of the fine-pitched thread (13) and the external diameter (18) of the unthreaded shank region (17), with
the fine-pitched thread (13) merging into the unthreaded cylindrical shank region (17) of the fixing neck (1) without the thread ending with the radius of the rounded region (20) of the base of the fine-pitched thread.

2. Device according to Claim 1,
**characterized**
**in that** the unthreaded cylindrical shank region (17) has an axial length (21) equivalent to at least the sum of the radii of the rounded regions (22, 19) of the transitions from the fine-pitched thread (13) to the unthreaded shank region (17) and from the unthreaded shank region (17) to the mounting flange (6).

3. Device according to one or more of the preceding claims,
**characterized**
**in that** an axial projection (25), whose radially outer end (23) flanks the fine-pitched thread (13) on its outside with a radial offset (24), is formed integrally with the fixing neck (1) as protection against rotation which acts with respect to the wall element or wall panel (15) when in the mounted position.

4. Device according to one or more of the preceding claims,
**characterized by**
insulating covers (27) on two mutually diametrically opposite outer regions of the mounting end (26) of the fixing neck (1), and projecting radially beyond it, which insulating covers (27) are aligned with their plane extent at right angles to the axial direction (7) of the fixing neck (1), are integral with the fixing neck, and are positioned within the interior of the enclosure when the fixing neck (1) is in the mounted position when it acts on the enclosure.

5. Device according to one or more of the preceding claims,
**characterized by**
a plastic material for the fixing neck (1), which has a mechanically high strength over a wide temperature range, such as polyester imide (PEI), liquid crystal polymer (LCP), tetrafluoroethylene/ethylene copolymer (ETFE), polyphenylene sulphide (PPS), polyamide imide (PAI), or polyimide (PI).

6. Modified form of a device in particular according to one or more of the preceding claims,
**characterized**
**in that** the fixing neck (1) is injection-moulded on an enclosure part.

## Revendications

1. Appareil électrique fonctionnel, notamment commutateur de sécurité, destiné à être utilisé en aéronautique, comprenant un boîtier, d'où fait saillie un collet de fixation essentiellement cylindrique (1), qui
- comporte sur son extrémité libre sur le côté à l'opposé du boîtier, sur sa périphérie, un filetage fin (13) pour le vissage d'un écrou,
- porte, sur son extrémité tournée vers le boîtier (30), une bride d'application (6) qui fait saillie radialement et comporte, comme surface d'application, un flanc annulaire perpendiculaire à l'axe longitudinal (7) du collet de fixation (1), et
- sert à retenir l'appareil dans une position de fixation, dans laquelle il traverse un trou de fixation (14) ou un perçage de fixation (14) d'un élément de mur ou d'un panneau d'un élément de mur ou d'un panneau de mur (15) et peut y être serré contre la bride d'application (6) par l'écrou vissé,
**caractérisé en ce**
- **que** le collet de fixation (1) en tant que pièce particulière séparée réalisée d'un seul tenant en matière plastique est relié au boîtier (3) dans la zone située entre sa bride de fixation (6) et son extrémité (4) située du côté du boîtier,
- **que** le collet de fixation (1) est formé, entre son extrémité filetée et la bride d'application (6), par une partie de tige non filetée (17), qui est coaxiale à l'axe longitudinal (7) du collet de fixation (1) et possède une forme circonférentielle périphérique cylindrique,
- dont le diamètre extérieur (18) est égal au diamètre du noyau du filetage fin contigu (13), et
- dont l'extrémité, tournée vers la bride d'application (6) se prolonge, au moyen d'un arrondi (19) qui représente en coupe transversale approximativement un quart de cercle, par la bride d'application (6), le rayon de cet arrondi (19) étant égal à la moitié de la différence entre le diamètre nominal du filetage fin (13) et le diamètre extérieur (18) de la partie en forme de tige non filetée (17), le filetage fin (13) se prolongeant sans la partie filetée possédant un diamètre de l'arrondi (20) du fond du filetage fin, par la partie en forme de tige cylindrique non filetée (17) du collet de fixation (1).

2. Appareil selon la revendication 1, **caractérisé en ce que** la partie en forme de tige cylindrique non, filetée (17) possède une longueur axiale (21) égale au moins à la somme des rayons des arrondis (22, 19) de la jonction du filetage fin (13) avec la partie en forme de tige non filetée (17) et de la jonction de la partie de tige non filetée (17) avec la bride d'application (6).

3. Appareil selon une ou plusieurs des revendications précédentes, **caractérisé en ce qu'**une partie saillante axiale (25), qui flanque par son extrémité extérieure du point de vue radial (23) le filetage fin (13) sur son côté extérieur, à une distance radiale (24), est agencée d'un seul tenant avec le collet de fixation (1) sous la forme d'un système de blocage contre toute rotation, actif dans la position de montage par rapport à l'élément de mur ou le panneau mural (15).

4. Appareil selon une ou plusieurs des revendications précédentes, **caractérisé par** des éléments de recouvrement isolants (27), qui font saillie radialement sur deux parties périphériques diamétralement opposées l'une à l'autre de l'extrémité de fixation (26) du collet de fixation (1), à partir de ces parties, sont positionnés dans la position de montage, agissant sur le boîtier, du collet de fixation (1) à l'intérieur de l'espace intérieur du boîtier, sont réalisés d'un seul tenant avec le collet de fixation et sont orientés de telle sorte que leur plan s'étend perpendiculairement à la direction axiale (7) du collet de fixation (1).

5. Appareil selon une ou plusieurs des revendications précédentes, **caractérisé par** une matière plastique qui est très résistante mécaniquement dans une gamme étendue de températures, du collet de fixation (1) , comme par exemple du polyesterimide (PEI), un polymère à cristal liquide (LCP), un copolymère tétrafluoroéthylène/éthylène (PTFE), du sulfure de polyphénylène (PPS), un imide de polyamide (PAI), du polyimide (PI).

6. Variante d'un appareil notamment selon une ou plusieurs des revendications précédentes, **caractérisée en ce que** le collet de fixation (1) est moulé par injection sur une partie du boîtier.
